# EUROPEAN PATENT SPECIFICATION

(11) **EP 0 444 105 B1**
(45) Date of publication and mention of the grant of the patent: **11.05.1994**
(21) Application number: 89913109.8
(22) Date of filing: 17.11.1989
(51) Int. Cl.: F16L 3/22

(54) **Cable bridge**
Kabelbrücke
Support de câbles

(30) Priority: 18.11.1988 NO 883152; 07.03.1989 NO 890948
(43) Date of publication of application: 04.09.1991
(73) Proprietor: KOKKERSVOLD, Tor, N-3947 Langangen (NO)
(72) Inventor: KOKKERSVOLD, Tor, N-3947 Langangen (NO)
(74) Representative: Prechtel, Jörg, Dipl.-Phys. Dr.
(86) International application number: NO8900122
(87) International publication number: WO9005870

(56) References cited:
- DE-C- 939 825
- DK-C- 108 366
- GB-A- 2 099 103
- NO-A- 845 099
- US-A- 3 233 851
- US-A- 3 325 128
- US-A- 3 432 128
- US-A- 4 347 998

## Description

The present invention relates to a cable bridge for support of electrical cables, pneumatic hoses, hydraulic and various other pipes on cable bridges or such, as stated out in the preamble part of claim 1.

Cables and pneumatic hoses are supported to cable bridges by strips. The strip is normally a stainless steel wire or a plastic strip.

Fastening of cables by means of strip is tedious and likewise it takes long time when cables or pneumatic pipes are detached, because the strips have to be broken before the cables or pneumatic pipes can be removed.

After some years in service, an uncovered electrical cable system will be covered with dust. At industrial sites the dust may represent a hazardous environment for the electricians working with the cables. Because the dust can be positioned, they have to take precautions. In chemical plants the process operator has to wear dust clothes when working with the cable bridges.

From NO patent application No. 845099 it is known a cable clamp system which illustrates how to eliminate the disadvantages related to supporting and detaching cables and pneumatic hoses om cable bridges.

This arrangement comprises a base member for supporting the cables which is formed as a member with upstanding walls for keeping the cables in position and a cover formed by one or several removeable clamping devices for interconnection with the upstanding walls for restraining the cables by that the cover member is locked to the cross members of the cable bridge.

The present invention relates to a further development and improvement of said cable clamping system. A cable bridge coprises mainly two longitudinal sidewalls or flanges which are joined together by a plurality of cross members or steps, as an ordinary ladder. The distance between the steps and the cross-sectional form of the steps can vary, but the cross-section are normally rectangular or sircular. The steps are reduced in weight by making them hollow or perforated. The sidewalls' cross section can also vary. Further on, the cable bridges can be produced in various widths, for instance 20, 40 or 60 cm.

The known cable bridge can suitably be manufactured by moulding or extruding, but an adaptation to the various types of cable bridges will require different tools or moulding machines. This is a costly operation when manufacturing small series. A main object of the invention is therefore to provide a cable bridge with at least one cable holder which by stamping and bending formes a base member with upstanding walls and which is made for interconnection to the cable bridge and for supporting to the matching removable clamping device which are securing and covering the cables. According to the invention this object is solved by the cable bridge with at least one cable holder having the characterizing features of claim 1.

With reference to a modified cable holder the base member is separated in various units, which are bent only at one end and formed with a half midsection or distance section. This system is particularly designed for cable bridges with straight, plane steps which basicly give a rigid support for the cables, pneumatic hoses etc.

The scope and characterizing features of the invention are defined in the corresponding claims 1-9. In order to better understand the invention, the cable clamping system will be described in more detail, by the way of example only, with reference to the accompanying drawings.
- Fig. 1: is a perspective drawing of an example of the cable clamp including securing devices made in one piece with two upstanding walls intended for connection with one transverse, removable clamp member.
- Fig. 2: illustrates partition member and clamp member mounted on a cable bridge.
- Fig. 3: illustrates a vertical cross-sectional view at line a-a on Fig. 2.
- Fig. 4: illustrates a modified, shortened example of the cable clamp which can be used independently of the widths of the steps.
- Fig. 4a: illustrates a cross-sectional view of the example given in Fig. 4 with a clamp member in the mounted position.
- Fig. 5: illustrates a second example of the cable clamp using an alternative fastening method for securing the cable clamp.
- Fig. 6 - 8: illustrates various alternatives for separation of the chennels in the partition member.
- Fig. 9: illustrates a complete cable clamp.
- Fig. 10, 11: illustrates various connections between the cable clamp members shown in Fig. 9.
- Fig. 12: illustrates a cable clamp including pipe clips.

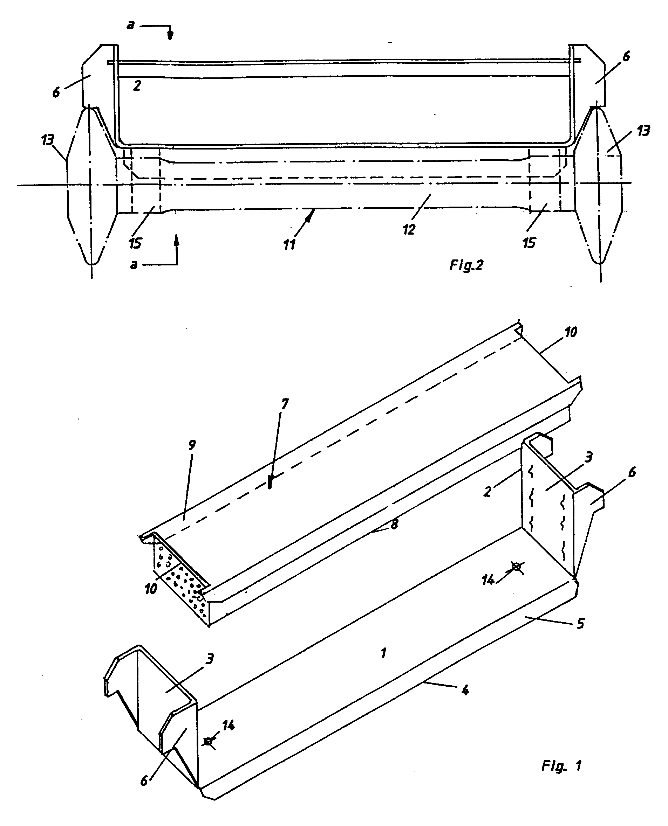

Fig. 1 illustrates a cable clamp comprising a supporting device made of a base member 1 and two upstanding end walls 3, made of one material member 4, which is cut by means of stamping and bended so that longitudinal sections 5 and end flanges 6 are formed. The walls 3 are supplied with nipples etc. 2 for the locking of the clamp member 7 which is designed to restrain the cables in the area on the base member between the upstanding walls 3. The clamp member 7 is also made out of one material member which is supplied with downwardly bent edges 9 and recessing parts 10 for inter locking to the upstanding end walls 3. A compressibe foam cushioning means 8 of neoprenrubber etc. is preferably fastened between the edges 9, restraining all the cables, even if they are of different diametre.

Fig. 2 illustrates a cable clamp mounted on a cable bridge 11 which comprises transversely steps 12 and flanges 13. From Fig. 2 it can be seen how the sidewalls 3 and end flanges 6 are manufactured for interconnection with the cable bridge flanges 13. The base member 1 is supplied with openings 14, Fig. 1, for mounting of clips 15 for connecting the fastening means to the cable bridge step 12.

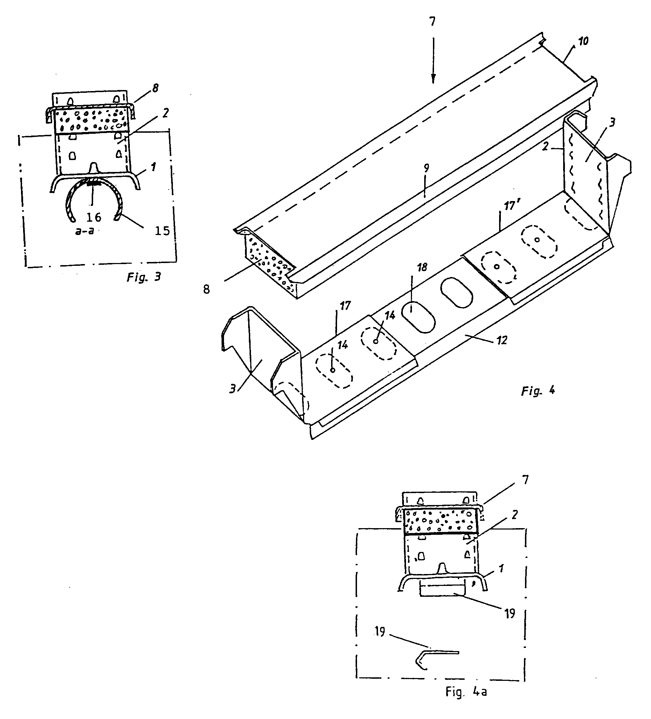

Fig. 3 illustrates a cross-sectional view at line a-a, Fig. 2, and it can be seen how the clip 15 is formed for attaining a safe connection to the steps. The drawings illustrates only one sectional view of the cable clamp, in that the cable bridge is left out. The clip 15 is made of spring steel or like, and it is easily fastened to the base member 1 by using a rivet 16. Fastening by means of a throughgoing screw and a corresponding nut can be an alternative.

Fig. 4 illustrates a modified version of a cable clamp. The clamp member is shown in a cross-sectional view and the base member 1 comprises two halves 17,17' where each has one upstanding end wall 3. The end wall 3 has a form corresponding to the form of Fig. 1-3, and the partition member is made for connection with a removable clamp member 7 which is provided with nipples 10 and edges 9. The two halves 17,17' are fastened to the steps 12 with a rectangular cross-section. The steps have several nipples 18, and to attain a rigid grip every unit 17,17' are provided with two clips 19 going through the member and being secured in the recession, see Fig. 4a. This method can be applied for all possible step lengths.

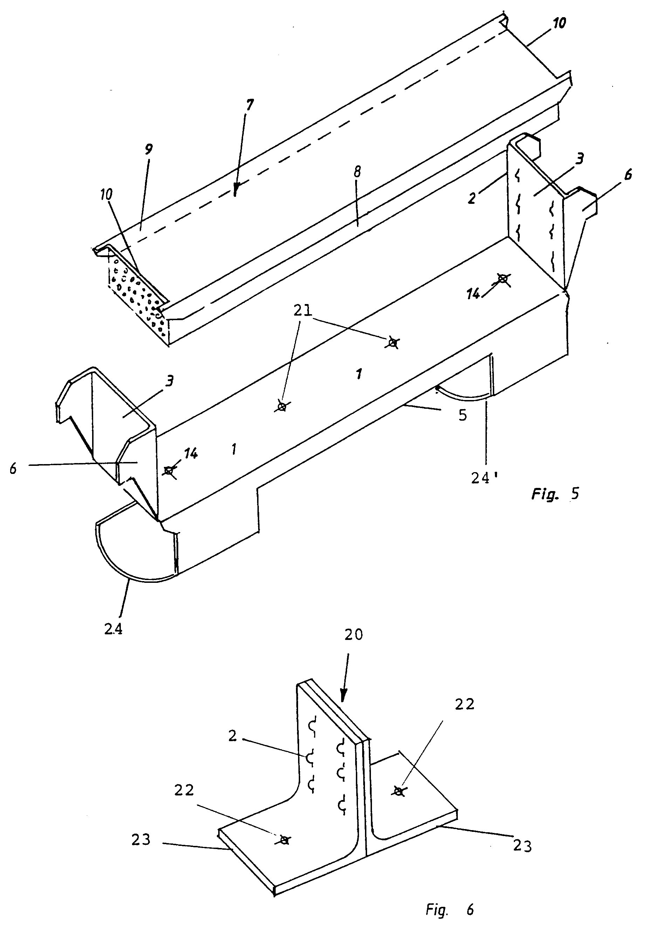

Fig. 5 illustrates a second variation where instead of separate fastening clips one has used fastening clip 24,24' comprising an integral part of the clamping member 7. As seen in the figure, the fastening clip is formed by an integral extension of one of the longitudinal edges 5 and reaches below the base member 1. Thus, the cable clamp can be fastened to a cable bridge by clipping the steps between the fastening clips 24,24' and the underside of the base member 1.

Instead of the solution given above, it is also possible to make each of the edges 5 so tall and curved (depending on the form of the steps) so that they partly cover the steps, thus the cable clamp can be fastened to the step in a cable bridge by clipping the steps between the edges 5.

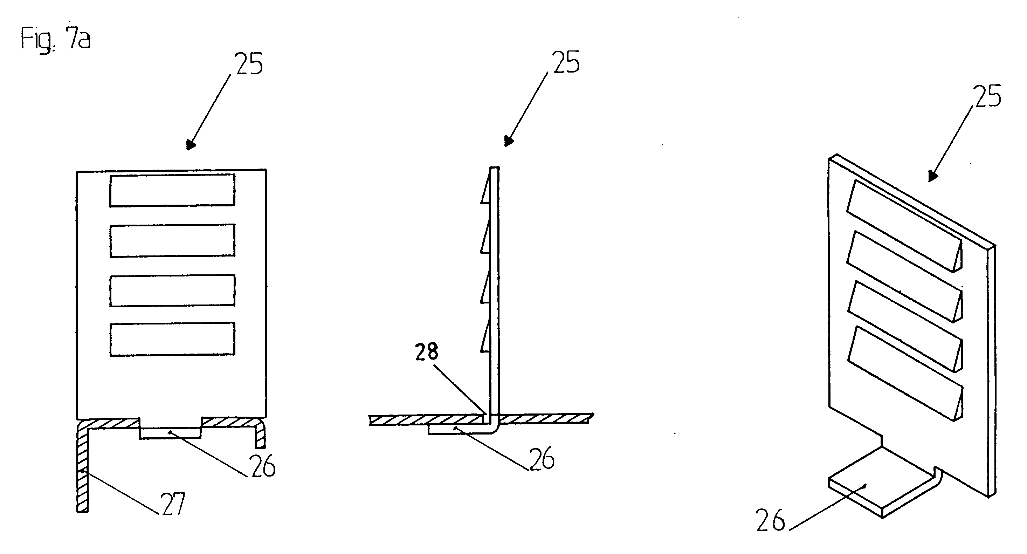

Fig. 6 illustrates a partition member 20 for separating the area between the upstanding walls 3 on the cable clamp. By using the partition member the cable clamp can be separated in two or more channels which can be applied for various types of cables or pipes. The separating members 20 can be manufactured in one piece with upturned flanges including nipples 2, or they can be formed as angular members 23 where one, upstanding flange is supplied with said nipples 2.

For fastening the partition members as illustrated in Fig. 6 one can use rivets or screws going through the opening 21,22 in the cable clamp and the separating member, or one can use glue, welding or such.

Fig. 7a-c illustrates examples of separating member of various forms, where the partition members are manufactured by stamping followed by bending. Fig. 7a illustrates a partition member 25 with a bent area 26. The partition member is designed to be fastened to the cable clamps base member 26 by locking the area 26 through a slot 28.

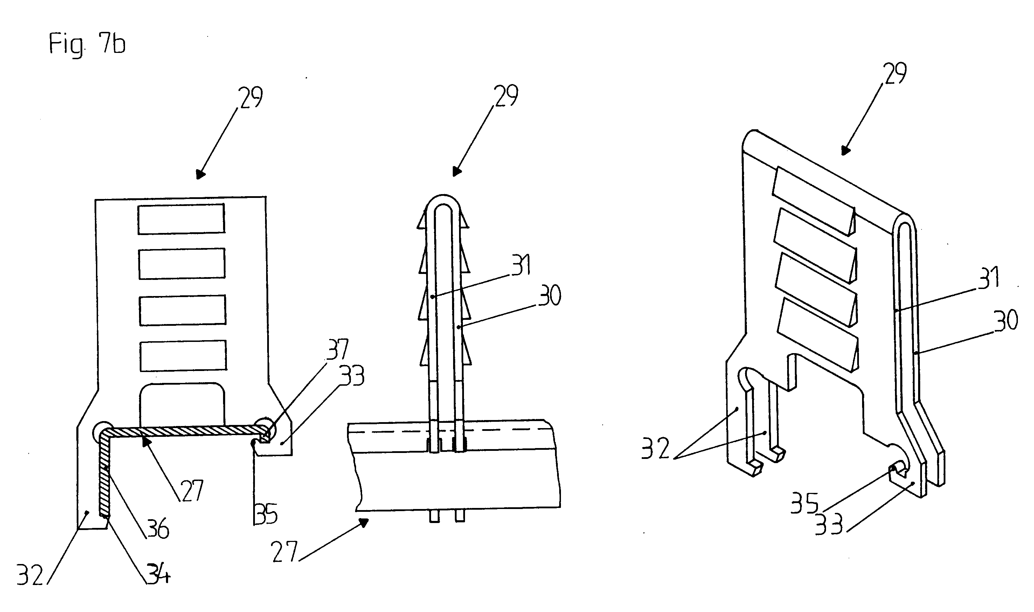

Fig. 7b illustrates a partition member 29 which is bent to form two parallell walls 30,31. The partition member 29 is secured to the base member 27 by a snapp-connection, because the parts 32,33 which are integral extensions of sides 30,31 are supplied with a barbed end 34,35 which fits into the base member's 27 flanges 36,37.

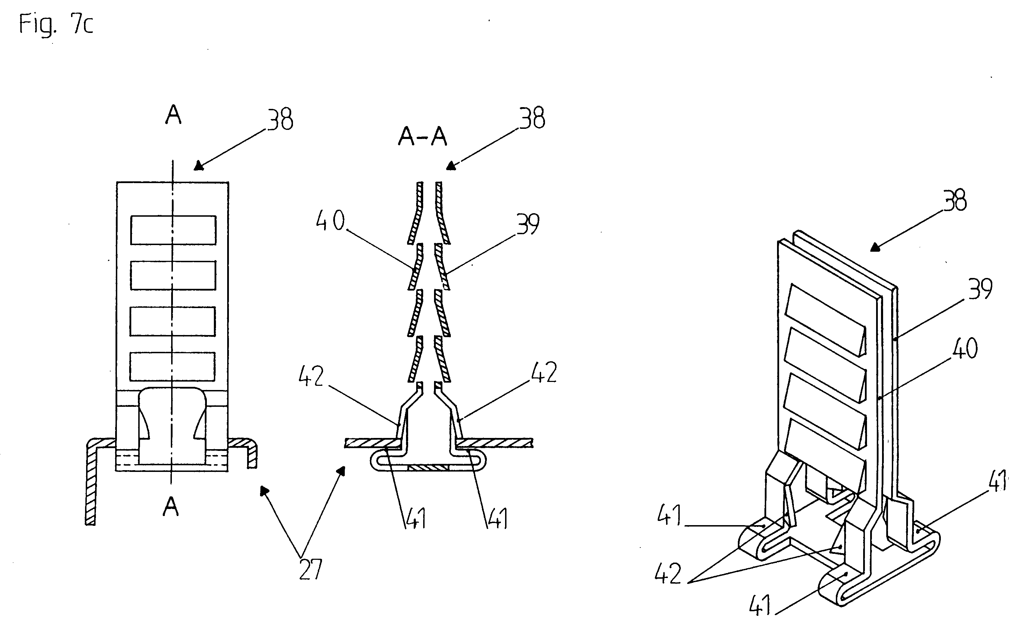

Fig. 7c illustrates a partition member 38 which is bent to form two parallell walls 39,40. The partition member is stamped and bent so that four support areas 41 are formed. The partition member 38 is fastened by entering item 38 through the opening in the base member 27 from below to support area 41 is in contact with the underside of the distance member. The barbed end 42 keeps the partition member in position in the opening.

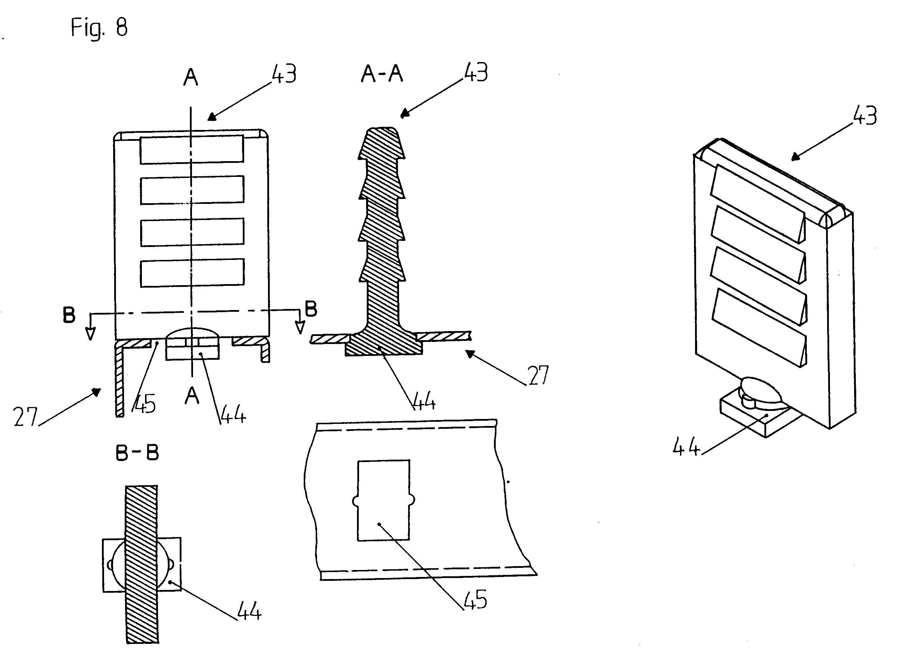

Fig. 8 illustrates a further example of a partition member 43 according to the invention. This is manufactured by moulding etc. and it is designed to be fastened to the cable clamp's base member 27 by using a bayonet joint, whereby the lower part of the partition section is equipped with a male part 44 which is formed for complementary operation with an opening 45 in the base member 27 and to be looked by turning.

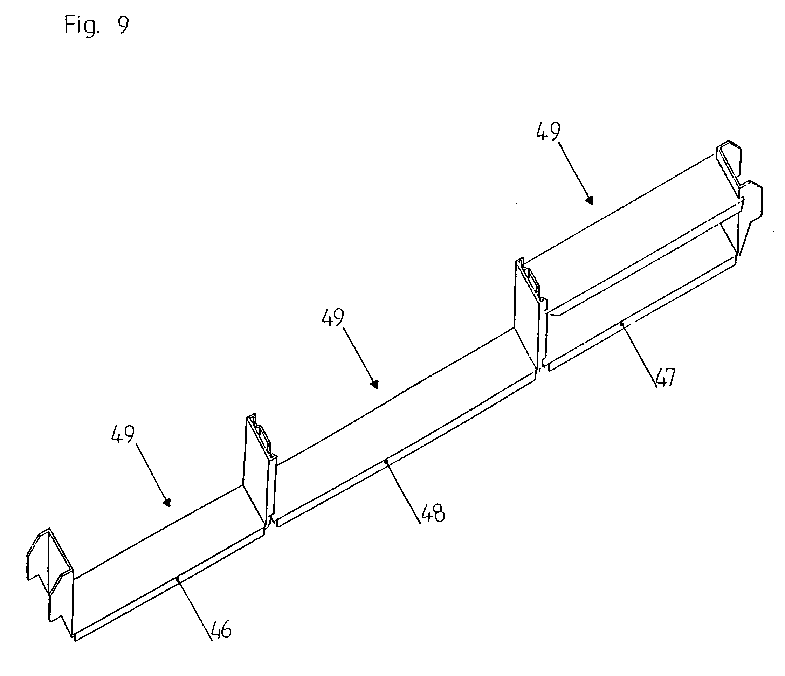

Fig. 9 illustrates an example of a cable clamp made of several clampings, ie. with two end parts 46, respectively 47, and a part 48 in between. This type of cable clamps are practical to use for wide cable bridges. Thus, one also achieve to separate the cable clamp in various cable channels in which different types of cables/pipes with various diameter or applications can be located, in the same way as achieved by using said partition member as mentioned previously.

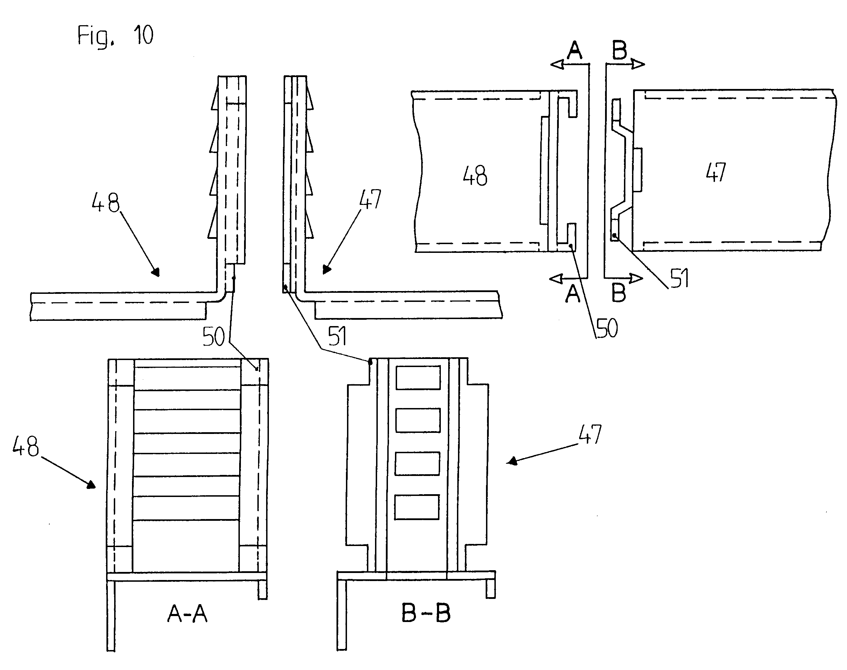

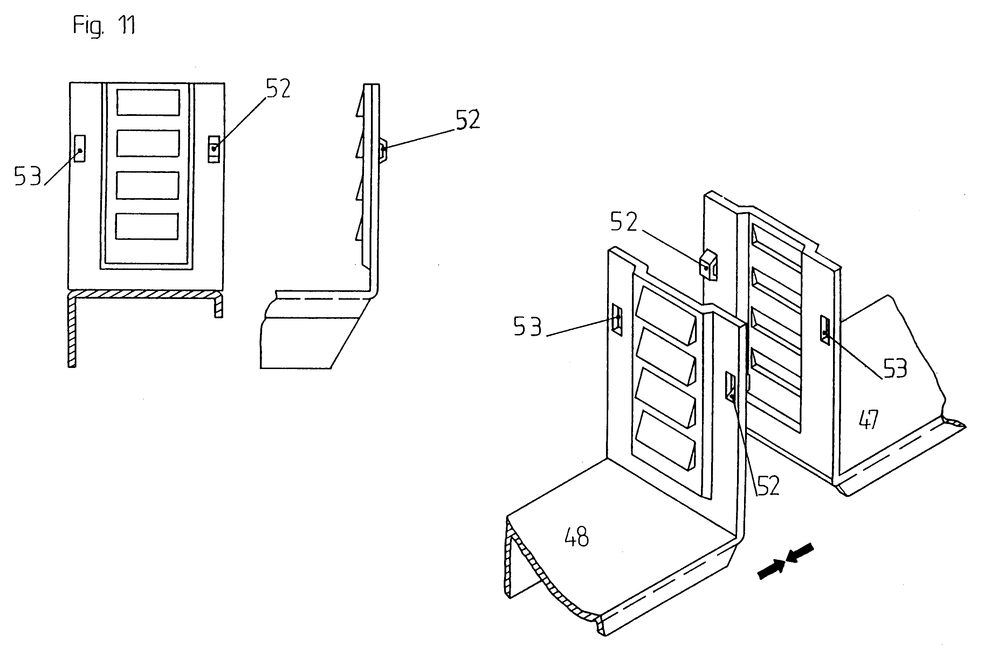

The intermediate member 49 can be fastened to the ends 46,47 by using a swallow tail connection 50, respectively 51, as illustrated in Fig. 10, or by using a nippel connection 52, respectively 53, as illustrated in Fig. 11. It should be mentioned that even though an intermediate member 48 is used in this example, the invention is not restricted to this example, but it may have several intermediate members, depending on the width of the cable bridge and the length of the cable clamp.

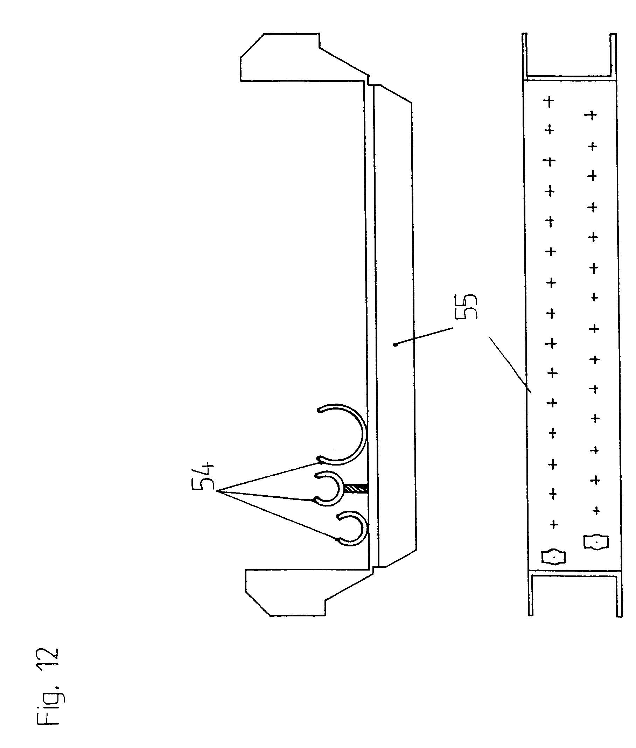

As previously said, the cable clamp according to the invention is formed for supporting both pipes and cables. Instead of securing the pipes by a clamping device as illustrated for example in Fig. 5, the pipes can be supported to the cable clamp by using a pipe clamp 54 as illustrated in Fig. 12. The pipe clamp can also be secured to the cable clamp base member 55 by using for example a bayonet joint as illustrated in Fig. 12.

The above described cable clamp is the preferred embodiment of the invention. Because the large variation of cable bridges manufactured, it may be necessary to change the cross-sectional view and design of both the end walls and base member, for instance by making square steps and side flanges.

## Claims

1. Cable bridge with side flanges (13) joined by transverse steps (12) provided with at least one cable holder and with at least one cable clamp (7) detachably connected to the cable holder, the cable holder comprising a base member (1) and elongated upstanding walls (3) at the respective ends of the base member (1) extending substantially perpendicular to the base member (1) and sections (5) extending from said base member (1) substantially in a direction opposite to the upstanding walls (3), said upstanding walls (3) being adapted for mounting said cable clamps (7) thereon,
**characterized in**
that the cable holder is formed of flat material (4) which is bent in two bending directions substantially perpendicular with respect to each other, that by bending in the first bending direction the sections (5) extending from the base member are formed, that by bending in the second bending direction the upstanding walls (3) are formed, and that the upstanding walls (3) are each provided with end flanges (6) extending outwardly and having edge portions fitted to the shape of the respective side flanges (13) of the cable bridge.

2. Cable bridge according to claim 1,
**characterized in**
that said at least one cable clamp (7) is designed to either have a detachable connection to both upstanding walls (3) or to have a detachable connection to one of the upstanding walls (3) and to a separate partition member (20, 25, 29, 38, 43) which is mounted on the base member (1) between the upstanding walls (3).

3. Cable bridges according to claim 2,
**characterized in**
that the partition member is fastened to the base member (1, 27) by using a screw connection or a rivet connection, a snap-coupling or a bayonet joint.

4. Cable bridge according to one of the preceding claims,
**characterized in**
that a flat material member (4) is bent upwardly at one end for forming an upstanding wall (3) and a shortened base member (1), and that two such units are connected reversely to form a supporting device which covers fully or partly the length of the cable bridge step (Fig. 4).

5. Cable bridge according to one of the preceding claims,
**characterized in**
that the cable holder is fastened to the cable bridge steps by using separate clips (15, 19) which are fastened to the cable holder on the underside of the base member (1).

6. Cable bridge according to claims 1-4,
**characterized in**
that the cable holder is fastened to the cable bridge steps by using fastening clamps (18, 18') which form an integral part of the cable holder.

7. Cable bridges according to claim 6,
**characterized in**
that the cable holder is fastened to the cable bridge step by clamping between the section (5) and the underside of the base member (1) (Fig. 5).

8. Cable bridge according to claim 6,
**characterized in**
that each of the sections (5) are formed to extend partly around the step (13) for fastening the cable holder to the step.

9. Cable bridge according to one of the preceding claims,
**characterized in**
that the cable holder comprises two end members (46, 47) and one or more intermediate members (48) (Fig. 9).

## Patentansprüche

1. Kabelbrücke mit Seitenflanschen (13), welche durch Quersprossen (12) verbunden sind, mit wenigstens einem Kabelhalter und mit wenigstens einer mit dem Kabelhalter abnehmbarbar verbundenen Kabelklammer (7), wobei der Kabelhalter ein Basiselement (1) und langgestreckte abstehende Wände (3) an den jeweiligen Enden des Basiselements (1) umfaßt, welche sich im wesentlichen orthogonal zu dem Basiselement (1) erstrecken, sowie Abschnitte (5), welche sich von dem Basiselement (1) im wesentlichen in einer Richtung entgegengesetzt zu den abstehenden Wänden (3) erstrecken, wobei die abstehenden Wände (3) zum Anbringen der Kabelklammern (7) daran geeignet sind,
**dadurch gekennzeichnet,**
daß der Kabelhalter aus flachem Material (4) hergestellt ist, welches in zwei zueinander im wesentlichen orthogonale Biegerichtungen gebogen ist,
daß durch Biegen in der ersten Biegerichtung die sich von dem Basiselement erstreckenden Abschnitte (5) gebildet sind,
daß durch Biegen in der zweiten Biegerichtung die abstehenden Wände (3) gebildet sind, und
daß die abstehenden Wände (3) jeweils mit Endflanschen (6) versehen sind, welche sich nach außen erstrecken und Randabschnitte aufweisen, die an die Form der jeweiligen Seitenflansche (13) der Kabelbrücke angepaßt sind.

2. Kabelbrücke nach Anspruch 1,
**dadurch gekennzeichnet,**
daß die wenigstens eine Kabelklammer (7) dazu ausgebildet ist, entweder mit beiden abstehenden Wänden (3) eine lösbare Verbindung aufzuweisen, oder mit einer der abstehenden Wände (3) und einem separaten Unterteilungselement (20, 25, 29, 38, 43) eine lösbare Verbindung aufzuweisen, welches an dem Basiselement (1) zwischen den abstehenden Wänden (3) angebracht ist.

3. Kabelbrücke nach Anspruch 2,
**dadurch gekennzeichnet,**
daß das Unterteilungselement unter Verwendung einer Schraubverbindung, oder einer Nietverbindung, einer Schnappkopplung oder eines Bajonetverschlusses an dem Basiselement (1, 27) festgelegt ist.

4. Kabelbrücke nach einem der vorhergehenden Ansprüche,
**dadurch gekennzeichnet,**
daß das Element (4) aus flachem Material an einem Ende aufgebogen ist, um eine abstehende Wand (3) sowie ein verkürztes Basiselement (1) zu bilden, und daß zwei derartige Einheiten entgegengesetzt miteinander verbunden sind, um eine Haltevorrichtung zu bilden, welche die Länge der Kabelbrückensprosse vollkommen oder teilweise bedeckt (Fig. 4).

5. Kabelbrücke nach einem der vorhergehenden Ansprüche,
**dadurch gekennzeichnet,**
daß der Kabelhalter an den Kabelbrückensprossen unter Verwendung separater Klemmen (15, 19) festgelegt ist, welche an dem Kabelhalter an einer Unterseite des Basiselements (1) festgelegt sind.

6. Kabelbrücke nach einem der Ansprüche 1 bis 4,
**dadurch gekennzeichnet,**
daß der Kabelhalter unter Verwendung von Befestigungsklammern (18, 18'), welche einen integralen Teil des Kabelhalters bilden, an den Sprossen der Kabelbrücke festgelegt ist.

7. Kabelbrücke nach Anspruch 6,
**dadurch gekennzeichnet,**
daß der Kabelhalter durch Klemmen zwischen den Abschnitt (5) und die Unterseite des Basiselements (3) an der Sprosse der Kabelbrücke festgelegt ist (Fig. 5).

8. Kabelbrücke nach Anspruch 6,
**dadurch gekennzeichnet,**
daß jeder der Abschnitte (5) derart ausgebildet ist, daß er sich zum Festlegen der Kabelhalter an der Sprosse teilweise um die Sprosse (13) erstreckt.

9. Kabelbrücke nach einem der vorhergehenden Ansprüche,
**dadurch gekennzeichnet,**
daß der Kabelhalter zwei Endelemente (46, 47) sowie ein oder mehrere Zwischenelemente (48) umfaßt (Fig. 9).

## Revendications

1. Support en forme de pont pour des câbles, ce support comportant des pièces latérales ou rebords (13), reliés par des traverses (12) comportant au moins un élément de support de câbles et au moins un serre-câbles (7) connecté, de façon amovible, à l'élément de support de câbles, cet élément de support de câbles comprenant une embase (1), et, aux extrémités respectives de l'embase (1) des parois (3) allongées verticales s'étendant dans une direction sensiblement perpendiculaire à l'embase (1), ainsi que des tronçons (5) s'étendant de ladite embase (1) sensiblement dans une direction opposée aux parois (3) verticales, lesdites parois verticales (3) étant adaptées au montage desdits serre-câbles (7) sur les parois, support en pont caractérisé en ce que l'élément de support de câbles est formé d'un matériau plat (4) qui est plié dans deux directions de pliage sensiblement perpendiculaires l'une à l'autre ; en ce que les tronçons (5) s'étendant de la base sont formés par le pliage dans la première direction de pliage ; en ce que les parois verticales (3) sont formées par le pliage dans la seconde direction de pliage ; et en ce que les parois verticales (3) comportent chacune des rebords (6) d'extrémité s'étendant vers l'extérieur et ayant des parties marginales s'adaptant à la forme des parties latérales (13) ou rebords respectifs du support en forme de pont pour câbles.

2. Support en forme de pont pour câbles selon la revendication 1, support caractérisé en ce qu'au moins un serre-câbles (7) est construit de façon à avoir une connexion amovible avec les deux parois (3) verticales ou bien avoir une connexion amovible avec l'une des parois (3) verticales et avec une cloison séparée (20, 25, 29, 38, 43) qui est montée sur l'embase (1) entre les parois verticales (3).

3. Support en forme de pont pour câbles, selon la revendication 2, caractérisé en ce que la cloison est fixée à l'embase (1, 27) par une connexion vissée ou par une connexion rivetée, un couplage par encliquetage ou un joint à baïonnette.

4. Support en forme de pont pour câbles selon l'une des revendications précédentes, caractérisé en ce que l'élément en matériau plat (4) est plié vers le haut à une extrémité pour former une paroi verticale (3) et une embase (1) raccourcie, et en ce que deux unités ou modules de ce genre sont connectés dos à dos pour former un dispositif de support qui recouvre entièrement ou partiellement la longueur de la traverse de support en forme de pont pour câbles (figure 4).

5. Support en forme de pont pour câbles selon l'une des revendications précédentes, caractérisé en ce que l'élément de support de câbles est fixé, aux traverses ou barreaux du support en forme de pont pour câbles, par utilisation de pinces (15, 19) séparées, qui sont fixées à l'élément de support de câbles sur le côté inférieur de l'embase (1).

6. Support en forme de pont pour câbles selon les revendications 1 à 4, caractérisé en ce que l'élément de support de câbles est fixé aux traverses du support en forme de pont pour câbles par utilisation de pinces de fixation (18, 18'), qui font partie intégrante de l'élément de support de câbles.

7. Support en forme de pont pour câbles selon la revendication 6, caractérisé en ce que l'élément de support de câbles est fixé à la traverse du support en forme de pont pour câbles par serrage entre le tronçon (5) et le côté inférieur de l'embase (1) (figure 5).

8. Support en forme de pont pour câbles selon la revendication 6, caractérisé en ce que chacun des tronçons (5) est formé de manière à s'étendre partiellement autour de la traverse (13) pour fixer l'élément de support de câbles à la traverse.

9. Elément en pont pour support de câbles selon l'une quelconque des revendications précédentes, caractérisé en ce que l'élément de support de câbles comprend deux éléments d'extrémité (46, 47) et un ou plusieurs éléments intermédiaires (48) (figure 9).
